# EUROPÄISCHE PATENTSCHRIFT

(11) **EP 0 729 977 B1**
(45) Veröffentlichungstag und Bekanntmachung des Hinweises auf die Patenterteilung: **04.09.2002**
(21) Anmeldenummer: 96108898.6
(22) Anmeldetag: 02.03.1992
(51) Int. Cl.: C08F 4/62, C07F 17/00, C08F 10/00

(54) **Metallocen und Katalysator**
Metallocene and catalyst
Métallocène et catalyseur

(30) Priorität: 09.03.1991 DE 4107682
(43) Veröffentlichungstag der Anmeldung: 04.09.1996
(62) Teilanmeldung aus: 92103538.2
(73) Patentinhaber: Basell Polyolefine GmbH, 67056 Ludwigshafen (DE)
(72) Erfinder: Brekner, Michael-Joachim, Dr., 65760 Eschborn (DE); Osan, Frank, Dr., 65779 Kelkheim (DE); Rohrmann, Jürgen, Dr., 65779 Kelkheim (DE); Antberg, Martin, Dr., 65719 Hofheim (DE)

(56) Entgegenhaltungen:
- EP-A- 0 316 155
- EP-A- 0 399 347

## Beschreibung

Die vorliegende Erfindung bezieht sich auf ein Metallocen und einen Katalysator, der ein Metallocen enthält.

Es ist bekannt, daß polycyclische Olefine mittels verschiedener Ziegler-Katalysatoren polymerisiert werden können. Die Polymerisation verläuft in Abhängigkeit vom Katalysator über Ringöffnung (vgl. US 4 178 424) oder Öffnung der Doppelbindung (vgl. EP-A 156 464, EP-A 283 164, EP-A-203 799).

Der Nachteil einer ringöffnenden Polymerisation besteht darin, daß das erhaltene Polymerisat Doppelbindungen enthält, die zu Kettenvernetzungen führen können und damit die Verarbeitbarkeit des Materials durch Extrudieren oder Spritzgießen erheblich einschränken.

Die Polymerisation unter Öffnung der Doppelbindung führt bei cyclischen Olefinen zu einer relativ niederen Polymerisationsgeschwindigkeit (Umsatzrate).

Eine gewisse Erhöhung der Reaktionsgeschwindigkeit wurde durch die Verwendung löslicher Metallocenverbindungen wie Bis-(Cyclopentadienyl)-zirkoniumdichlorid erreicht (vgl. JP 61-221206).

Als Katalysator läßt sich bei cyclischen Olefinen eine stereorigide chirale Metallocenverbindung wie z.B. Ethylen-bis(indenyl)zirkoniumdichlorid (vgl. EP-A 283164) oder Dimethylsilyl-bis(indenyl)zirkoniumdichlorid (vgl. ZA 90/5308) verwenden, wobei die Polymerisation unter Erhalt des Ringes erfolgt.

Die Glastemperatur amorpher Copolymere korreliert mit den Einbauraten der Comonomere in das Polymer. Beispielsweise erhöht sich die Glastemperatur von Norbornen/Ethylen-Copolymeren pro Molprozent Norbornen im Polymer um 4 bis 5 Kelvin. Die Glastemperatur ist ein indirektes Maß für die Wärmeformbeständigkeit.

Versuche haben gezeigt, daß die erzielten Einbauverhältnisse bei Verwendung herkömmlicher Metallocenkatalysatoren sehr empfindlich durch die Reaktionsparameter wie Monomerkonzentration, Druck und Temperatur beeinflußt werden.

Bei diskontinuierlicher Polymerisation ist die chemische Einheitlichkeit der Produkte stark umsatzabhängig.

Bei kontinuierlichem Betrieb ist eine relativ lange Anfahrperiode notwendig, um zu stationären Reaktionsbedingungen zu kommen. Die in dieser Phase entstandenen chemisch uneinheitlichen Produkte liegen in der Regel außerhalb der für Handelsprodukte geforderten Spezifikationen.

In beiden Fällen ist eine geringere Empfindlichkeit der Katalyse auf Veränderungen der Reaktionsparameter wünschenswert, um Zeit und Abfall einzusparen und um höhere Raum-Zeit-Ausbeuten zu erzielen.

Statistische Copolymere sind durch eine statistische Verteilung der Comonomereinheiten in der Polymerkette gekennzeichnet. Dies hat eine höhere Fluktuation der Dichte des Materials zur Folge als dies bei Homopolymeren oder alternierenden Copolymeren gegeben ist. Dichtefluktuationen erhöhen jedoch den Streulichtanteil und mindern die Transparenz. Anwendungen, bei denen, wie bei Lichtwellenleitern, höchste Anforderungen an die Lichtdurchlässigkeit gestellt werden, sind dadurch eingeschränkt. Auch hier sind daher in hohem Maß chemisch einheitliche Produkte wünschenswert.

Unter chemischer Einheitlichkeit wird ein nahezu konstantes Einbauverhaltnis der Monomeren in das Copolymer - über die jeweilige Polymerkette als auch über die Gesamtzahl der gebildeten Ketten (über die Potymerisationszeit) - verstanden. So steigt die chemische Einheitlichkeit in dem Maße wie sich die Copolymeren in ihrem Aufbau von einer statistischen zu einer alternierenden Monomerabfolge nähern.

Es bestand daher die Aufgabe, ein Verfahren zur Herstellung von Cycloolefincopolymeren zu finden, das, basierend auf der Polymerisation über die Doppelbindung, bei hoher Raum-Zeit-Ausbeute chemisch einheitliche Copolymere liefert, wobei gleichzeitig Veränderungen der Reaktionsparameter auf die chemische Einheitlichkeit der Produkte einen geringeren Einfluß haben als bei bekannten Verfahren.

Es wurde gefunden, daß mit speziellen Metallocenkatalysatoren diese Aufgabe gelöst werden kann.

Die Erfindung betrifft daher ein Verfahren zur Herstellung eines Cycloolefincopolymers durch Polymerisation von 0,1 bis 99,9 Gew.-%, bezogen auf die Gesamtmenge der Monomeren, mindestens eines Monomers der Formeln I, II, III, IV, V oder VI 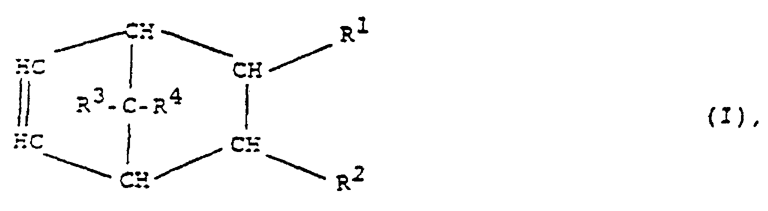 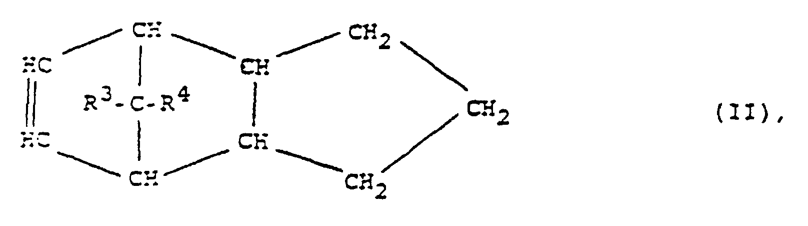 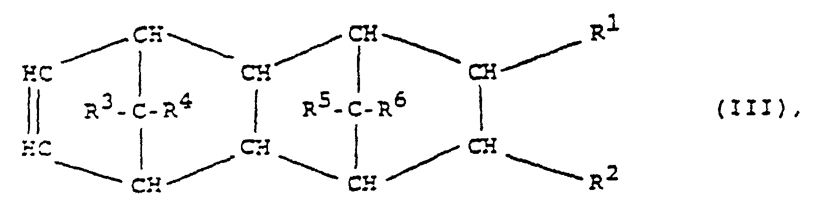 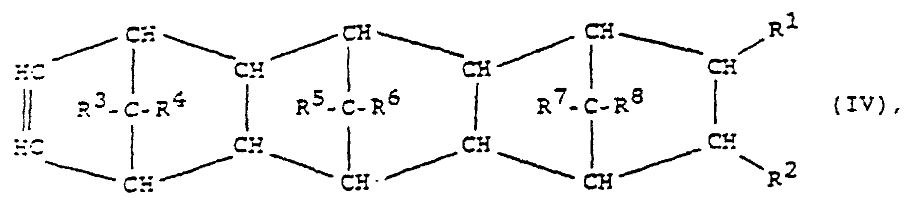 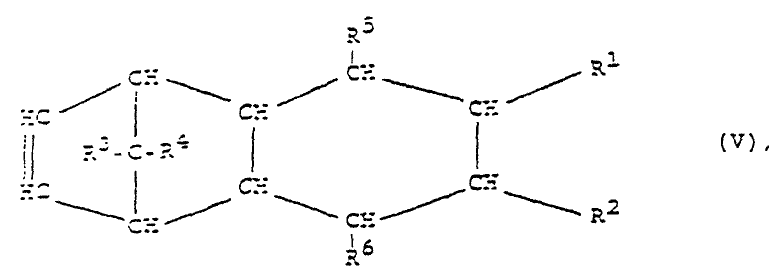 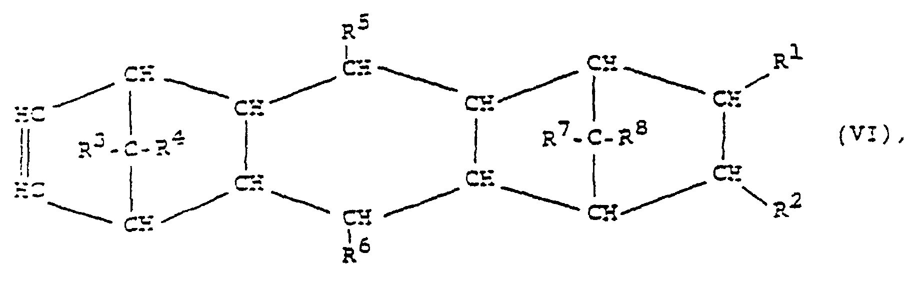 worin R¹, R², R³, R⁴, R⁵, R⁶, R⁷ und R⁸ gleich oder verschieden sind und ein Wasserstoffatom, einen C₆-C₁₆-Aryl- oder einen C₁-C₈-Alkylrest bedeuten, wobei gleiche Reste in den verschiedenen Formeln eine unterschiedliche Bedeutung haben können,
0 bis 99,9 Gew.-%, bezogen auf die Gesamtmenge der Monomeren, eines Cycloolefins der Formel VII 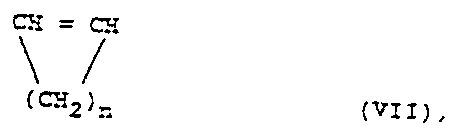 worin n eine Zahl von 2 bis 10 ist, und
0 bis 99,9 Gew.-%, bezogen auf die Gesamtmenge der Monomeren, mindestens eines acyclischen Olefins der Formel VIII 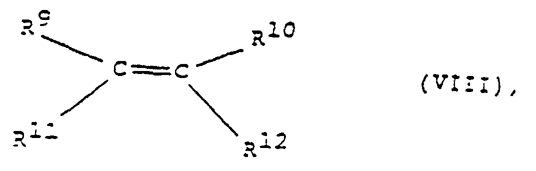 worin R⁹, R¹⁰, R¹¹ und R¹² gleich oder verschieden sind und ein Wasserstoffatom oder einen C₁-C₈-Alkylrest bedeuten, bei Temperaturen von -78 bis 150°C und einem Druck von 0,01 bis 64 bar, in Gegenwart eines Katalysators, welcher aus einem Aluminoxan der Formel IX 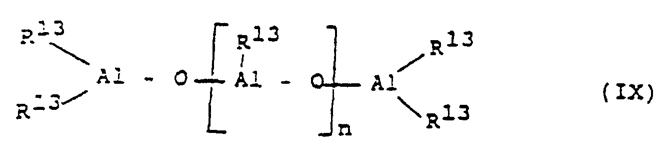 für den linearen Typ und/oder der Formel X 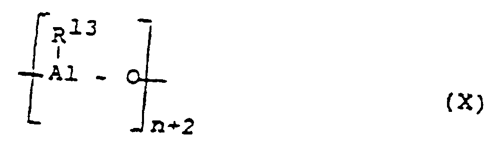 für den cyclischen Typ, wobei in den Formeln IX und X die Reste R¹³ gleich oder verschieden sind und eine C₁-C₆-Alkylgruppe oder Phenyl oder Benzyl bedeuten und n eine ganze Zahl von 0 bis 50 ist, und einem Metallocen XI

Isopropylen-(9-fluorenyl)(1-(3-isopropyl)cyclopentadienyl)-M¹Cl₂, Diphenylmethylen-(9-fluorenyl)(1-(3-tert.-butyl)cyclopentadienyl)-M¹Cl₂ und Isopropylen-(9-fluorenyl)(1-(3-tert.-butyl)cyclopentadienyl)-M¹Cl₂, wobei M¹ Zirkon oder Hafnium ist.

Das monocyclische Olefin VII kann für die Zwecke der Erfindung auch substituiert sein (z.B. durch Aryl- oder Alkylreste).

Bevorzugt wird im flüssigen Cycloolefinmonomer, Cycloolefinmonomergemisch oder in konzentrierten Lösungen polymerisiert.

Im erfindungsgemäßen Verfahren wird mindestens ein polycyclisches Olefin der Formeln I, II, III, IV, V oder VI, vorzugsweise ein Cycloolefin der Formeln I oder III, worin R¹, R², R³, R⁴, R⁵, R⁶, R⁷ und R⁸ gleich oder verschieden sind und ein Wasserstoffatom oder einen C₁-C₈-Alkylrest bedeuten, wobei gleiche Reste in den verschiedenen Formeln eine unterschiedliche Bedeutung haben können, polymerisiert.
Gegebebenenfalls wird auch ein monocyclisches Olefin der Formel VII, worin n eine Zahl von 2 bis 10 ist, verwendet. Ein anderes Comonomer ist ein acyclisches Olefin der Formel VIII, worin R⁹, R¹⁰, R¹¹ und R¹² gleich oder verschieden sind und ein Wasserstoffatom oder einen C₁-C₈-Alkylrest bedeuten. Bevorzugt sind Ethylen oder Propylen.

Insbesondere werden Copolymere von polycyclischen Olefinen, vorzugsweise der Formeln I und III, mit den acyclischen Olefinen VIII hergestellt.

Besonders bevorzugte Cycloolefine sind Norbornen und Tetracyclododecen, wobei diese durch (C₁-C₆)-Alkyl substituiert sein können. Sie werden vorzugsweise mit Ethylen copolymerisiert; besondere Bedeutung besitzen Ethylen/Norbornen-Copolymere.

Bevorzugt werden Einbauverhältnisse der Comonomeren VII und/oder VIII in das Copolymer von 20:80 bis 80:20. Insbesondere werden Einbauverhältnisse von 40:60 bis 60:40 bevorzugt.

Das polycyclische Olefin (I bis VI) wird in einer Menge von 0,1 bis 99,9 Gew.-% und das monocyclische Olefin (VII) in einer Menge von 0,1 bis 99,9 Gew.-%, jeweils bezogen auf die Gesamtmenge der Monomeren, eingesetzt.

Die Konzentration des offenkettigen Olefins ergibt sich aus der Löslichkeit des offenkettigen Olefins in dem Reaktionsmedium bei gegebenem Druck und gegebener Temperatur.

Als polycyclische Olefine, monocyclische Olefine und offenkettige Olefine sind auch Gemische zweier oder mehrerer Olefine des jeweiligen Typs zu verstehen. Das heißt, es können neben polycyclischen Bicopolymeren auch Ter- und Multicopolymere nach dem erfindungsgemäßen Verfahren hergestellt werden. Auch Copolymere der Cycloolefine VII mit den acyclischen Olefinen VIII lassen sich vorteilhaft nach dem beschriebenen Verfahren erhalten. Von den Cycloolefinen VII ist Cyclopenten, das substituiert sein kann, bevorzugt.

Der für das erfindungsgemäße Verfahren zu verwendende Katalysator besteht aus einem Aluminiumoxan und mindestens einem Metallocen XI.

Die verbrückten Metallocene können nach bekanntem Reaktionsschema hergestellt werden:
vgl. Journal of Organometallic Chem. 288 (1985) 63-67 und EP-A 320 762.

Von den erfindungsgemäßen Metallocenen XI, welche in dem Teil des Moleküls, der durch das Zentralatom M¹ und die Substituenten gebildet wird, C₁-Symmetrie aufweisen (d.h. dieser Molekülteil weist keinerlei höhere Symmetrieelemente auf und ist nur durch eine Drehung um 360° - einzählige Achse - mit sich selbst zur Deckung zu bringen), sind besonders zu nennen:
Isopropylen-(9-fluorenyl)(1-(3-isopropyl)cyclopentadienyl)-zirkondichlorid,
Diphenylmethylen-(9-fluorenyl)(1-(3-tert.-butyl)cyclopentadienyl)-zirkondichlorid und
Isopropylen-(9-fluorenyl)(1-(3-tert.-butyl)cyclopentadienyl)-zirkondichlorid und die entsprechenden Hafniumdichloride.

Zur Bedeutung des Begriffs C₁-Symmetrie vgl. K. Mislow "Einführung in die Stereochemie, Verlag Chemie, 1. Auflage 1967, S. 23 f.

Der Cokatalysator ist ein Aluminoxan der Formel IX und/oder der Formel X. In diesen Formeln können die Reste R¹³ gleich oder verschieden sein und bedeuten eine C₁-C₆-Alkylgruppe, vorzugsweise Methyl, Ethyl oder Isobutyl, Butyl oder Neopentyl, oder Phenyl oder Benzyl. Besonders bevorzugt ist Methyl n ist eine ganze Zahl von 0 bis 50, bevorzugt 5 bis 40.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen R¹³ werden entsprechend der gewünschten Zusammensetzung zwei verschiedene Aluminiumtrialkyle (AlR₃ + AlR'₃) mit Wasser umgesetzt (vgl. S. Pasynkiewicz, Polyhedron 9 (1990) 429 und EP-A 302 424).

Die genaue Struktur der Aluminoxane ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, das Metallocen vor dem Einsatz in der Polymerisationsreaktion mit einem Aluminoxan der Formel (IX) und/oder (X) vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Das Metallocen kann auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Verbindung der Formel RₓNH₄₋ₓBR'₄ oder der Formel R₃PHBR'₄ als Cokatalysator verwendet. Dabei sind x = 1, 2 oder 3, R = Alkyl oder Aryl, gleich oder verschieden, und R' = Aryl, das auch fluoriert oder teilfluoriert sein kann. In diesem Fall besteht der Katalysator aus dem Reaktionsprodukt eines Metallocens mit einer der genannten Verbindungen (vgl. EP-A 277 004).

Falls dem Reaktionsgemisch Lösemittel zugesetzt wird, dann handelt es sich um gebräuchliche inerte Lösemittel wie z.B. aliphatische oder cycloaliphatische Kohlenwasserstoffe, Benzin- bzw. hydrierte Dieselölfraktionen oder Toluol.

Die Metallocenverbindung wird in einer Konzentration, bezogen auf das Übergangsmetall, von 10⁻³ bis 10⁻⁸, vorzugsweise 10⁻⁴ bis 10⁻⁷ mol Übergangsmetall pro dm³ Reaktorvolumen angewendet. Das Aluminoxan wird in einer Konzentration von 10⁻⁴ bis 10⁻¹, vorzugsweise 10⁻⁴ bis 2 • 10⁻² mol pro dm³ Reaktorvolumen verwendet, bezogen auf den Gehalt an Aluminium. Prinzipiell sind aber auch höhere Konzentrationen möglich.

Bei der Herstellung von Copolymerisaten kann die Variation der Molverhältnisse des polycyclischen Olefins zum eingesetzten offenkettigen Olefin in einem weiten Bereich erfolgen. Bevorzugt werden molare Verhältnisse von 3:1 bis 100:1 Cycloolefin zu offenkettigem Olefin eingesetzt. Durch die Wahl der Polymerisationstemperatur, durch die Konzentration der Katalysatorkomponenten und das eingesetzte Molverhältnis bzw. den Druck des gasförmigen, offenkettigen Olefins läßt sich die Einbaurate an Comonomer beinahe beliebig steuern. Bevorzugt werden Einbauraten zwischen 20 und 80 Mol-% der cyclischen Komponenten und besonders bevorzugt werden Einbauraten zwischen 40 und 60 Mol-% der cyclischen Komponenten.

Die mittlere Molmasse des gebildeten Copolymers läßt sich durch Wasserstoff-Dosierung, Variation der Katalysatorkonzentration oder Variation der Temperatur in bekannter Weise steuern.

Die Polydispersität M_{w}/Mₙ der Copolymeren ist mit Werten zwischen 2,0 - 3,5 recht eng. Dadurch resultiert ein Eigenschaftbild der Polymerisate, das diese für das Spritzgießen besonders geeignet macht.

Weiterhin wurde anhand von NMR-Spektren festgestellt, daß sich diese Cycloolefincopolymere auch in ihrer Mikrostruktur deutlich von denen unterscheiden, die mit herkömmlichen Metallocenkatalysatoren hergestellt worden sind (vgl. Fig. 1). Dieser Unterschied könnte damit erklärt werden, daß die erfindungsgemäßen Katalysatoren aufgrund ihrer speziellen Symmetrie alternierend polymerisieren. Nach heutigem Kenntnisstand ist anzunehmen, daß die erfindungsgemäßen Cycloolefincopolymere alternierende Cycloolefinsequenzen enthalten, die eine strukturelle Differenzierbarkeit nach NMR ermöglichen (vgl. Figur 1).

Die erfindungsgemäß hergestellten Materialien eignen sich besonders zur Herstellung von Extrusionsteilen wie Folien, Schläuchen, Rohren, Stangen und Fasern als auch zur Herstellung von Spritzgußartikeln beliebiger Form und Größe.

Eine wichtige Eigenschaft der erfindungsgemäßen Materialien ist ihre Transparenz. Dadurch kommt besonders den optischen Anwendungen der extrudierten oder spritzgegossenen Teile aus diesen Materialien eine große Bedeutung zu. Der mit einem Abbe-Refraktometer und Mischlicht bestimmte Brechungsindex der in den nachfolgenden Beispielen beschriebenen Reaktionsprodukte liegt im Bereich zwischen 1,520 und 1,555. Nachdem der Brechungsindex sehr nahe an dem von Kronglas (n = 1,51) liegt, können die erfindungsgemäßen Produkte als Glasersatz verschiedene Anwendungen finden wie beispielsweise Linsen, Prismen, Trägerplatten und -folien für optische Datenspeicher, für Videoplatten, für Compact Disks, als Deck- und Fokussierscheiben für Solarzellen, als Deck- und Streuscheiben für Leistungsoptiken, als Lichtwellenleiter in der Form von Fasern oder Folien.

Die erfindungsgemäßen Polymeren sind auch für die Herstellung von Polymerlegierungen einsetzbar. Die Legierungen können in der Schmelze oder in Lösung hergestellt werden. Die Legierungen weisen jeweils eine für bestimmte Anwendungen günstige Eigenschaftskombination der Komponenten auf. Für Legierungen mit den erfindungsgemäßen Polymeren sind folgende Polymere einsetzbar:

Polyethylen, Polypropylen, (Ethylen-Propylen)-Copolymere, Polybutylen, Poly-(4-methyl-1-penten), Polyisopren, Polyisobutylen, Naturkautschuk, Poly-(methylmethacrylat), weitere Polymethacrylate, Polyacrylate, (Acrylat-Methacrylat)-Copolymere, Polystyrol, (Styrol-Acrylnitril)-Copolymere, Bisphenol-A-Polycarbonat, weitere Polycarbonate, aromatische Polyestercarbonate, Polyethylenterephthalat, Polybutylenterephthalat, amorphe Polyarylate, Nylon-6, Nylon-66, weitere Polyamide, Polyaramide, Polyetherketone, Polyoxymethylen, Polyoxyethylen, Polyurethane, Polysulfone, Polyethersulfone, Polyvinylidenfluorid.

Die in den folgenden Beispielen angegebenen Glastemperaturen (Tg) wurden mittels DSC (Differential Scanning Calorimetry) bei einer Aufheizrate von 20°C/min bestimmt. Die angegebenen Viskositätszahlen wurden gemäß DIN 53 728 ermittelt.

### Beispiel 1 (Allgemeine Vorschrift)

Ein 1,5-dm³-Reaktor wurde mit Ethylen gefüllt und mit 600 cm³ einer 85 gewichtsprozentigen Lösung von Norbornen in Toluol gefüllt. Durch mehrfaches Aufdrücken von Ethylen (6 bar) wurde die Lösung mit Ethylen gesättigt. Es wurde ein Druck von y bar (Überdruck) eingestellt, 5 cm³ toluolische Methylaluminoxanlösung (10,1 Gew,-% Methylaluminoxan der Molmasse 1300 g/Mol nach kryoskopischer Bestimmung) in den Reaktor gegeben und 15 min bei x°C gerührt. Eine Lösung des Metallocens in 5 cm³ toluolischer Methylaluminoxanlösung wurde nach 15 minütiger Voraktivierung zugegeben. (Zur Molekulargewichtsregelung kann Wasserstoff vor der Katalysatorzugabe zugegeben werden).

Unter Rühren (750 UPM) wurde eine Stunde bei x°C polymerisiert, wobei der Ethylendruck durch Nachdosieren bei y bar gehalten wurde.

Die Reaktionslösung wurde in ein Gefäß abgelassen und schnell in 5 dm³ Aceton eingetropft, 10 min gerührt und anschließend filtriert.

Der erhaltene Feststoff wurde mehrfach mit 10 %iger Salzsäure und Aceton im Wechsel gewaschen. Es wurde neutral gewaschen und nochmals mit Aceton gerührt. Das erneut filtrierte Polymer wurde bei 80°C und einem Druck von 0,2 bar 15 Stunden getrocknet.

### Beispiel 2

Es wurde analog Beispiel 1 polymerisiert. Es wurden 12 mg Isopropenyl-(9-fluorenyl)-[1-(3-isopropyl)cyclopentadienyl]zirkondichlorid eingesetzt und eine Stunde bei 40°C und 3 bar Ethylenüberdruck polymerisiert.
Es wurden 17,9 g Polymer erhalten. Die Schmelztemperatur betrug 286°C.

## Patentansprüche

1. Metallocene der Formel (XI):
Isopropylen-(9-fluorenyl)(1-(3-isopropyl)cyclopentadienyl)-M¹Cl₂, Diphenylmethylen-(9-fluorenyl)(1-(3-tert.-butyl)cyclopentadienyl)-M¹Cl₂ und Isopropylen-(9-fluorenyl)(1-(3-tert.-butyl)cyclopentadienyl)-M¹Cl₂, wobei M¹ Zirkon oder Hafnium ist.

2. Isopropylen-(9-fluorenyl)(1-(3-isopropyl)cyclopentadienyl)-zirkondichlorid, Diphenylmethylen-(9-fluorenyl)(1-(3-tert.-butyl)cyclopentadienyl)-zirkondichlorid und Isopropylen-(9-fluorenyl)(1-(3-tert.-butyl)cyclopentadienyl)-zirkondichlorid.

3. Katalysator, bestehend aus einem Aluminoxan der Formel IX 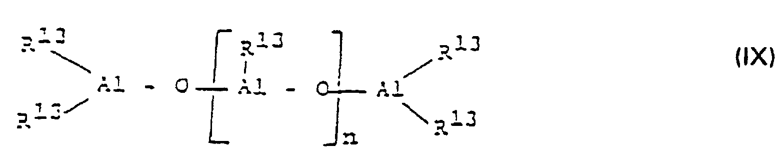 für den linearen Typ und/oder Formel X 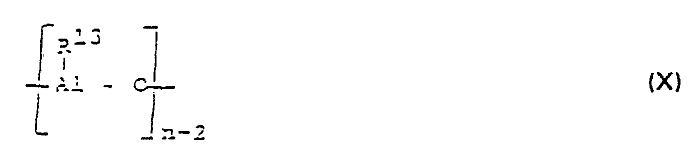 für den cyclischen Typ, wobei in den Formeln IX und X die Reste R¹³ gleich oder verschieden sind und eine C₁-C₆-Alkylgruppe oder Phenyl oder Benzyl bedeuten und n eine ganze Zahl von 0 bis 50 ist, und einem Metallocen der Formel XI nach einem oder mehreren der Ansprüche 1 bis 2.

4. Katalysator nach Anspruch 3, der auf einen Träger aufgebracht ist.

5. Katalysator nach Anspruch 3 oder 4, der vorpolymerisiert ist.

6. Katalysator nach einem oder mehreren der Ansprüche 3 bis 5, wobei neben einem Aluminoxan eine salzartige Verbindung der Formel RₓNH₄₋ₓ BR'₄ oder der Formel R₃PHBR'₄ verwendet wird und wobei x = 1, 2 oder 3, R = Alkyl oder Aryl, gleich oder verschieden, und R' = Aryl, das auch fluoriert sein kann, bedeuten.

7. Katalysator nach einem oder mehreren der Ansprüche 3 bis 5, wobei anstelle eines Aluminoxans eine salzartige Verbindung der Formel RₓNH₄₋ₓ BR'₄ oder der Formel R₃PHBR'₄ verwendet wird und wobei x = 1, 2 oder 3, R = Alkyl oder Aryl, gleich oder verschieden, und R' = Aryl, das auch fluoriert sein kann, bedeuten.

## Claims

1. A metallocene of the formula (XI):
isopropylene(9-fluorenyl)(1-(3-isopropyl)cyclopentadienyl)M¹Cl₂, diphenylmethylene(9-fluorenyl)(1-(3-tert-butyl)cyclopentadienyl)M¹Cl₂ or isopropylene(9-fluorenyl)(1-(3-tert-butyl)cyclopentadienyl)M¹Cl₂, where M¹ is zirconium or hafnium.

2. Isopropylene(9-fluorenyl)(1-(3-isopropyl)cyclopentadienyl)zirconium dichloride, diphenylmethylene(9-fluorenyl)(1-(3-tert-butyl)cyclopentadienyl)zirconium dichloride or isopropylene(9-fluorenyl)(1-(3-tert-butyl)cyclopentadienyl)zirconium dichloride.

3. A catalyst comprising an aluminoxane of the formula IX 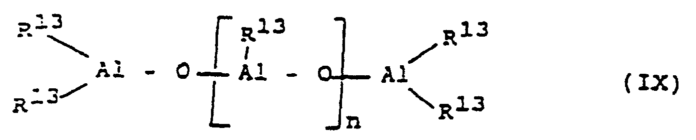 for the linear type and/or the formula X 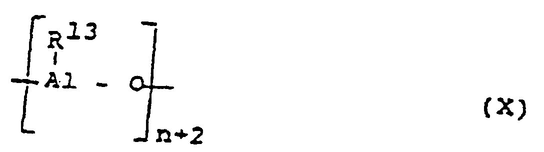 for the cyclic type, where, in the formulae IX and X, the radicals R¹³ are identical or different and are each a C₁-C₆-alkyl group or phenyl or benzyl and n is an integer from 0 to 50, and a metallocene of the formula XI as claimed in claim 1 or 2.

4. A catalyst as claimed in claim 3 which has been applied to a support.

5. A catalyst as claimed in claim 3 or 4 which has been prepolymerized.

6. A catalyst as claimed in any of claims 3 to 5, wherein a salt-like compound of the formula RₓNH₄₋ₓBR'₄ or the formula R₃PHBR'₄ is used in addition to an aluminoxane and x = 1, 2 or 3, R = alkyl or aryl, identical or different, and R' = aryl which may also be fluorinated.

7. A catalyst as claimed in any of claims 3 to 5, wherein a salt-like compound of the formula RₓNH₄₋ₓBR'₄ or the formula R₃PHBR'₄ is used in place of an aluminoxane and x = 1, 2 or 3, R = alkyl or aryl, identical or different, and R' = aryl which may also be fluorinated.

## Revendications

1. Métallocènes de formule (XI) :
isopropylène-(9-fluorényl)(1-(3-isopropyl)cyclopentadiényl)-M¹Cl₂,
diphénylméthylène-(9-fluorényl)(1-(3-tert.-butyl)cyclopentadiényl)-M¹Cl₂ et
isopropylène-(9-fluorényl)(1-(3-tert.-butyl)cyclopentadiényl)M¹Cl₂,
formules dans lesquelles M¹ représente un atome de zirconium ou d'hafnium.

2. Le dichlorure d'isopropylène-(9-fluorényl)(1-(3-isopropyl)cyclopentadiényl)-zirconium,
le dichlorure de diphénylméthylène-(9-fluorényl)(1-(3-tert.-butyl)cyclopentadiényl)-zirconium et
le dichlorure d'isopropylène-(9-fluorényl)(1-(3-tert.-butyl)-cyclopentadiényl)-zirconium.

3. Catalyseur constitué d'un aluminoxane de formule IX 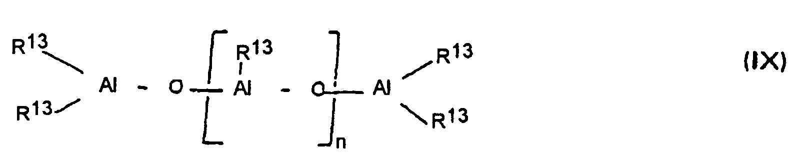 en ce qui concerne le type linéaire, et/ou de formule X 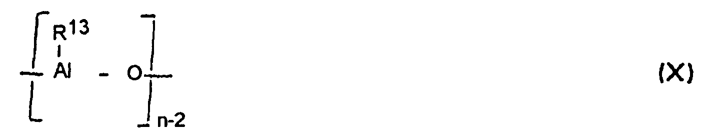 en ce qui concerne le type cyclique, où les restes R¹³ dans les formules IX et X sont identiques ou différents et représentent un groupe alkyle en C₁ à C₆ ou phényle ou benzyle et n représente un nombre entier de 0 à 50, et d'un métallocène de formule XI, selon l'une ou les deux des revendications 1 à 2.

4. Catalyseur selon la revendication 3, qui est appliqué sur un support.

5. Catalyseur selon la revendication 3 ou 4, que l'on a soumis à une prépolymérisation.

6. Catalyseur selon l'une ou plusieurs des revendications 3 à 5, **caractérisé en ce que** l'on met en oeuvre, outre l'aluminoxane, un composé salin de formule RₓNH₄₋ₓBR'₄ ou de formule R₃PHBR'₄ où x = 1, 2 ou 3, et où les restes R sont identiques ou différents et représentent un groupe alkyle ou aryle, et R' représente un groupe aryle qui est éventuellement fluoré.

7. Catalyseur selon l'une ou plusieurs des revendications 3 à 5, **caractérisé en ce que** l'on met en oeuvre, à la place de l'aluminoxane, un composé salin de formule RₓNH₄₋ₓBR'₄ ou de formule R₃PHBR'₄ où x = 1, 2 ou 3, et où les restes R sont identiques ou différents et représentent un groupe alkyle ou aryle, et R' représente un groupe aryle qui est éventuellement fluoré.
